## Europäisches Patentamt

## European Patent Office

## Office européen des brevets

(11) Veröffentlichungsnummer: **0 093 930**
A1

(12) **EUROPÄISCHE PATENTANMELDUNG**

(21) Anmeldenummer: 83103997.9

(22) Anmeldetag: 23.04.83

(51) Int. Cl.³: **F 02 D 29/06**, B 60 L 11/08

(30) Priorität: 29.04.82 DE 3215869
25.11.82 DE 3243515

(43) Veröffentlichungstag der Anmeldung: **16.11.83**
**Patentblatt 83/46**

(84) Benannte Vertragsstaaten: **AT FR GB IT SE**

(71) Anmelder: **BROWN, BOVERI & CIE Aktiengesellschaft, Kallstadter Strasse 1, D-6800 Mannheim 31 (DE)**

(72) Erfinder: **Schulz, Manfred, Ing. grad., Gleiwitzer Strasse 20, D-6944 Hemsbach (DE)**

(74) Vertreter: **Kempe, Wolfgang, Dr. et al, c/o Brown, Boveri & Cie AG Postfach 351, D-6800 Mannheim 1 (DE)**

(54) **Verfahren und Einrichtung zur Steuerung und Regelung eines Dieselmotors.**

(57) Mit der Erfindung wird bei dieselelektrisch angetriebenen Fahrzeugen verhindert, daß der Dieselmotor (1) im Anfahrbereich eine zu hohe Drehzahl annimmt. Es wird dazu ein Sollwertgeber (12a) vorgeschlagen, der Drehzahlsollwerte ($n^{D*}$) für den Dieselmotor in Abhängigkeit vom Wert der Führungsgröße ($W_1$) und der Fahrzeuggeschwindigkeit (v) abgibt. Der Sollwertgeber (12a) berücksichtigt, daß der Leistungsbedarf des Fahrzeuges beim Anfahren gering ist und gibt deshalb auch bei hohen Werten der Führungsgröße ($W_1$) nur eine niedrige Solldrehzahl für den Dieselmotor vor.

0093930

BROWN, BOVERI & CIE   AKTIENGESELLSCHAFT
Mannheim                              18. Nov. 1982
Mp.-Nr. 668/82                        ZPT/P3-Sf/Bt

Verfahren und Einrichtung zur Steuerung und Regelung
eines Dieselmotors

Die Erfindung bezieht sich auf ein Verfahren zur Steuerung und Regelung eines Dieselmotors gemäß dem Oberbegriff des Anspruchs 1 sowie auf eine Einrichtung zur
Durchführung des Verfahrens. Das Verfahren bzw. die Einrichtung kann z.B. bei dieselelektrisch angetriebenen
Lokomotiven angewendet werden.

Aus IEEE Transactions on industry applications,
Vol. IA-9, Nr. 4. Juli/Aug. 1973, Seite 482 bis 491,
insbesondere Seite 486, Kapitel "Control System", 3. Absatz und Seite 487, Fig. 10 ist ein Verfahren zur Steuerung eines Dieselmotors bekannt, bei dem die Brennstoffzufuhr nur in Abhängigkeit von einer Führungsgröße W gesteuert wird. Mit der Führungsgröße W wird vom Fahrzeugführer ein relativer Leistungswert vorgegeben. Dieses
Verfahren hat den Nachteil, daß im Anfahrbereich des
Fahrzeugs der Dieselmotor mit einer zu hohen Drehzahl
betrieben wird. Die hohe Drehzahl im Anfahrbereich
erklärt sich aus dem geringen Leistungsbedarf beim

Anfahren gemäß der Beziehung

$$P_D \sim Z \cdot v + P_V$$

$P_D$ = Leistung des Diesemotors

$Z$ = Zugkraft

$v$ = Geschwindigkeit

$P_V$ = Verlustleistung.

Solange sich das Fahrzeug nicht oder nur langsam bewegt, ist demnach im wesentlichen nur die Verlustleistung zu decken. Werden hohe Werte der Führungsgröße W eingestellt, nimmt die Dieselmotordrehzahl unnötig hohe Werte an. Dadurch vergrößern sich Verschleiß und Verbrauch.

Der Erfindung liegt die Aufgabe zugrunde, ein Verfahren sowie eine Einrichtung zur Steuerung und Regelung eines Dieselmotors in dieselelektrisch angetriebenen Fahrzeugen anzugeben, die auch im Anfahrbereich eines damit angetriebenen Fahrzeuges zu einer optimalen Drehzahl des Dieselmotors führen.

Diese Aufgabe wird durch ein Verfahren mit den im Anspruch 1 gekennzeichneten Merkmalen gelöst.

Ausgestaltungen und eine Einrichtung zur Durchführung des Verfahrens sind in den Unteransprüchen gekennzeichnet.

Die mit der Erfindung erzielbaren Vorteile bestehen insbesondere darin, daß durch die optimale Anpassung der Dieselmotordrehzahl an die geforderte Leistung im Anfahrbereich eine geringere Umweltbelastung eintritt, Brennstoff gespart wird und der Verschleiß des Motors verringert wird.

Ein Ausführungsbeispiel ist in der Zeichnung dargestellt und wird nachstehend beschrieben.

Es zeigen:

Fig. 1      eine Einrichtung zur Steuerung und Regelung eines Dieselmotors als Teil eines Antriebssystems einer dieselelektrischen Lokomotive,

Fig. 2      typisches Kennlinienfeld eines Dieselmotorreglers,

Fig. 3      typisches Zugkraft-Geschwindigkeits-Kennfeld einer Diesel-Lokomotive.

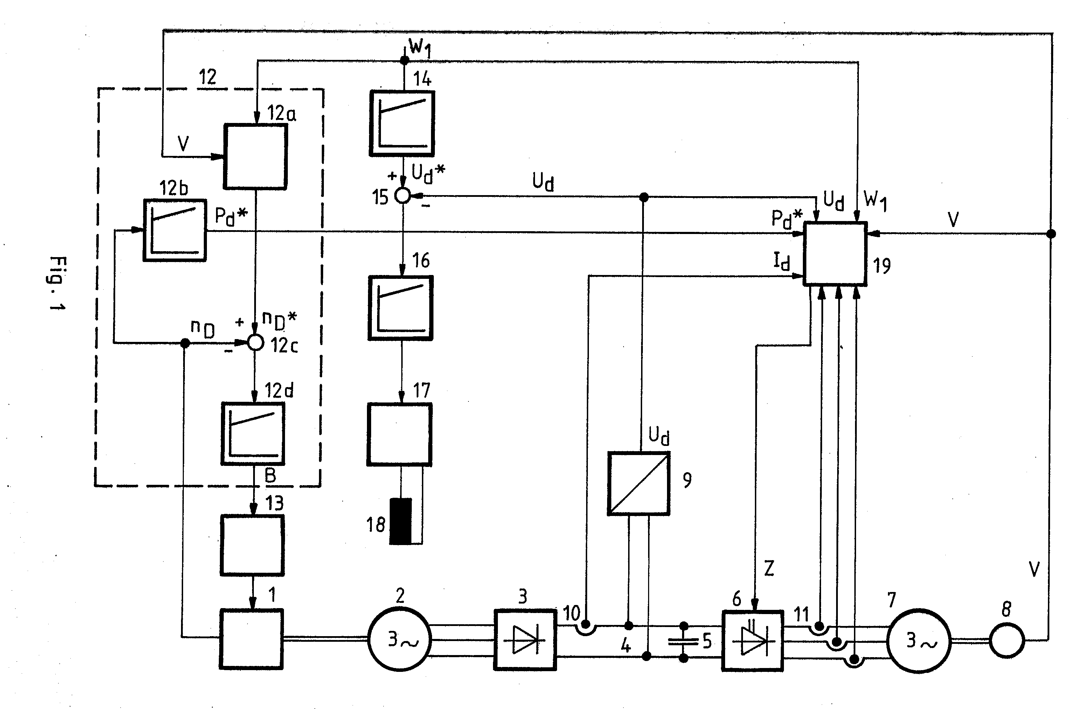

In Fig. 1 ist ein Blockschaltbild des Antriebs- und Regelsystems für einen Drehstromantrieb eines dieselelektrischen Triebfahrzeuges dargestellt. Ein Dieselmotor 1 dient zum Antrieb eines Drehstromgenerators 2. Die vom Generator 2 abgegebene dreiphasige Wechselspannung wird über einen ungesteuerten Gleichrichter 3 gleichgerichtet und einem Gleichspannungszwischenkreis 4 zugeführt. Zwischen den Polen des Gleichspannungszwischenkreises 4 ist ein Stützkondensator 5 angeordnet. Ein Wechselrichter 6 wandelt die Gleichspannung des Zwischenkreises 4 in eine dreiphasige Wechselspannung variabler Frequenz und Amplitude um. Diese Drehspannung dient zur Speisung einer Asynchronmaschine 7, der Antriebsmaschine der Lokomotive.

Mit Hilfe einer Drehzahlerfassungseinrichtung 8 wird die Fahrzeuggeschwindigkeit v erfaßt. Eine Stromerfassungseinrichtung 10 dient zur Messung des Zwischenkreisstromes $I_d$. Die Zwischenkreisspannung $U_d$ wird mit Hilfe einer Spannungserfassungseinrichtung 9 erfaßt. Die vom Wechselrichter 6 abgegebenen Phasenströme werden durch Stromerfassungseinrichtungen 11 ermittelt.

Zur Regelung der vom Drehstromgenerator 2 abgegebenen Spannung und damit der Zwischenkreisspannung $U_d$ wird die Führungsgröße $W_1$ einem Kennliniengeber 14 zugeleitet. Der Kennliniengeber 14 gibt einen Sollwert $U_d$* für die Zwischenkreisspannung $U_d$ in Abhängigkeit von der Führungsgröße $W_1$ an eine Vergleichsstelle 15 ab. Der Vergleichsstelle 15 wird als zweite Eingangsgröße der Istwert $U_d$ der Zwischenkreisspannung zugeführt. Die Vergleichsstelle 15 gibt die Ausgangsgröße $U_d^* - U_d$ an einen Spannungsregler 16 ab. Der Spannungsregler 16 beeinflußt ausgangsseitig über ein zwischengeschaltetes Erregergerät 17 die Erregerwicklung 18 des Drehstromgenerators 2.

Zur Regelung des Wechselrichters 6 ist eine Regeleinrichtung 19 vorgesehen, der eingangseitig die Führungsgröße $W_1$, Istwerte von Zwischenkreisspannung $U_d$, Zwischenkreisstrom $I_d$, Fahrzeuggeschwindigkeit v und Ständerstrom der Asynchronmaschine 7 sowie der Sollwert $P_d^*$ der Zwischenkreisleistung zugeleitet werden. Die Regeleinrichtung 19 liefert Steuerbefehle Z zur Zündung des Wechselrichters 6.

Zur Regelung der Drehzahl des Dieselmotors 1 ist eine Regeleinrichtung 12 vorgesehen. Der Regeleinrichtung 12 werden eingangsseitig Istwerte der Fahrzeuggeschwindigkeit v und der Drehzahl $n_D$ des Dieselmotors 1 und eine Führungsgröße $W_1$ vorgegeben. Die Führungsgröße $W_1$ wird vom Lokführer vorgegeben und gibt das Verhältnis der abzugebenden Leistung bzw. des Drehmoments zur maximal möglichen Leistung bzw. des Drehmoments bei der jeweiligen Fahrzeuggeschwindigkeit an. Gegebenenfalls kann die Führungsgröße $W_1$ mittels eines dynamischen Begrenzers (dw1/dt) begrenzt werden. Ausgangsseitig ist die Regeleinrichtung 12 über ein Steuergerät 13 mit dem Dieselmotor 1 verbunden. Desweiteren gibt die Regeleinrichtung 12 einen Sollwert $P_d^*$ für die elektrische Zwischenkreisleistung ausgangsseitig ab.

Im einzelnen besteht die Regeleinrichtung 12 aus einem zweidimensionalen Sollwertgeber 12a, einem Kennliniengeber 12b, einer Vergleichsstelle 12c und einem Drehzahlregler 12d. Der zweidimensionale Sollwertgeber 12a gibt einen Drehzahlsollwert $n_d^*$ in Abhängigkeit von der Führungsgröße $W_1$ und der Fahrzeuggeschwindigkeit v an die Vergleichsstelle 12c ab. Der Vergleichsstelle 12c liegt ferner der Drehzahlistwert $n_D$ mit negativem Vorzeichen an. Das Differenzsignal $n_D^* - n_D$ wird dem Drehzahlregler 12d (PI-Regler) zugeführt, der ausgangsseitig dem Steuergerät 13 einen Brennstoffwert B vorgibt.

Der Kennliniengeber 12b ermittelt aus dem Dieseldrehzahlistwert $n_D$ die zugehörige optimale Leistung $P_d^*$ zur Steuerung der Wechselrichter-Regeleinrichtung 19. Durch Verwendung des Istwertes der Dieseldrehzahl wird vorteilhaft eine Überlastung des Dieselmotors verhindert.

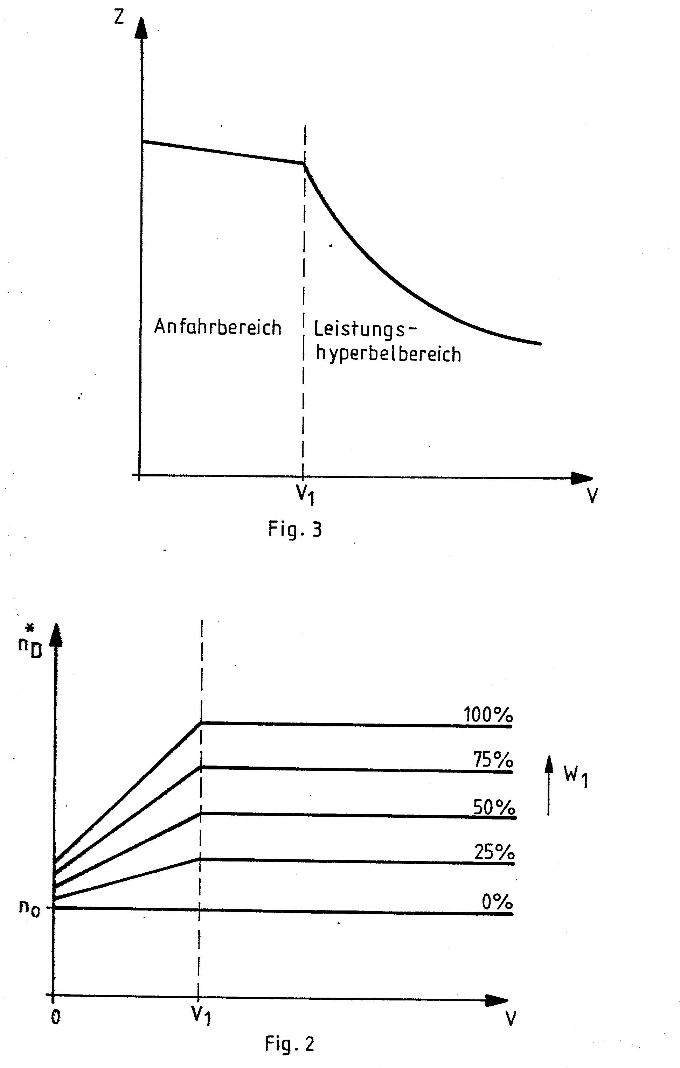

In Fig. 2 ist ein typisches Kennlinienfeld für einen Sollwertgeber 12a dargestellt, der einen Dieselmotordrehzahlsollwert $n_D^*$ in Abhängigkeit von der Fahrzeuggeschwindigkeit v und der Führungsgröße $W_1$ bildet. Bei Fahrzeugstillstand wird abhängig von der eingestellten Führungsgröße $W_1$ nur ein geringfügig über der Leerlaufdrehzahl $n_0$ liegender Sollwert $n_D^*$ ausgegeben. Die Erhöhung des Sollwertes $n_D^*$ gegenüber der Leerlaufdrehzahl $n_0$ hängt dabei vom Lokomotivtyp ab. Leerlaufdrehzahl $n_0$ wird bei beliebiger Fahrzeuggeschwindigkeit v ausgegeben, wenn die Führungsgröße $W_1$ den Wert 0 hat. Mit unterschiedlicher Steigung je nach dem Wert der eingestellten Führungsgröße $W_1$ steigt der Drehzahlsollwert $n_D^*$ mit zunehmender Fahrzeuggeschwindigkeit v an, bis ein Begrenzungswert bei einer Geschwindigkeit $v_1$ erreicht ist. Bei der Geschwindigkeit $v_1$ ist die

jeweilige für die eingestellte Führungsgröße notwendige maximale Dieselmotordrehzahl erreicht. Da bei Fahrzeuggeschwindigkeiten v über dem Wert $v_1$ die Dieselmotorsolldrehzahl $n_D^*$ nicht mehr gesteigert wird, nimmt die Zugkraft der Lokomotive im Bereich oberhalb der Geschwindigkeit $v_1$ nach einer Hyperbelfunktion ab. In Fig. 3 ist das zugehörige Zugkraft(Z)-Geschwindigkeits(v)-Diagramm dargestellt.

Der Abstand der Sollwertgeber-Kennlinien in Fig. 2 mit dem Parameter $W_1$ hängt von der Dieselmotorkennlinie Motorleistung = f (Motordrehzahl) ab.

A n s p r ü c h e

1. Verfahren zur Steuerung und Regelung eines Dieselmotors in dieselelektrisch angetriebenen Fahrzeugen, wobei die Drehzahl des Dieselmotors durch die Steuerung der Brennstoffzufuhr gesteuert wird, in Abhängigkeit von einem Leistungswert als Führungsgröße, dadurch gekennzeichnet, daß

a) die Dieselmotordrehzahl ($n_D$) außerdem in Abhängigkeit von der Fahrzeuggeschwindigkeit (v) geregelt wird, wobei die Dieselmotordrehzahl ($n_D$) so geregelt wird, daß

aa) sich eine Dieselmotor-Leerlaufdrehzahl ($n_0$) einstellt, wenn bei beliebiger Fahrzeuggeschwindigkeit (v) die Führungsgröße ($W_1$) den Wert 0 hat,

bb) die Dieselmotor-Drehzahl ($n_D$) in einem Bereich der Fahrzeuggeschwindigkeit (v) zwischen dem Wert 0 und einem Begrenzungswert ($v_1$) mit einer von der Führungsgröße ($W_1$) abhängigen Steilheit mit zunehmender Fahrzeuggeschwindigkeit (v) ansteigt,

cc) die Dieselmotor-Drehzahl ($n_D$) in einem Bereich der Fahrzeuggeschwindigkeit (v) über dem Begrenzungswert ($v_1$) konstant auf einem Drehzahlwert bleibt, der vom eingestellten Wert der Führungsgröße ($W_1$) abhängt, und

b) in Abhängigkeit von der Dieselmotordrehzahl ($n_D$) ein Leistungssollwert ($P_d^*$) gebildet und zur Steuerung einer Wechselrichter-Regeleinrichtung (19) verwendet wird.

2. Verfahren nach Anspruch 1, dadurch gekennzeichnet, daß die Dieselmotor-Drehzahl ($n_D$) so geregelt wird, daß sich bei Fahrzeugstillstand eine vom eingestellten Wert der Führungsgröße ($W_1$) abhängige Drehzahl einstellt.

3. Einrichtung zur Durchführung des Verfahrens nach Anspruch 1 oder 2, bei der eine Steuer- und Regeleinrichtung vorgesehen ist, der eingangsseitig die Führungsgröße ($W_1$) und die Dieselmotordrehzahl ($n_D$) anliegen und die eine Brennstoffmenge (B) als Ausgangsgröße liefert, dadurch gekennzeichnet, daß

a) an der Steuer- und Regeleinrichtung (12) eingangsseitig außerdem die Fahrzeuggeschwindigkeit (v) anliegt,

b) die Steuer- und Regeleinrichtung (12) einen zweidimensionalen Sollwertgeber (12a) enthält, der in Abhängigkeit von der Führungsgröße ($W_1$) und der Fahrzeuggeschwindigkeit (v) einen Drehzahlsollwert ($n_d^*$) abgibt, woraus eine Vergleichsstelle (12c) durch Vergleich mit der Dieselmotordrehzahl ($n_D$) ein Differenzsignal ($n_D^* - n_D$) bildet, das ein Drehzahlgeber (12d) in die Brennstoffmenge (B) umsetzt und

c) die Steuer- und Regeleinrichtung (12) einen Kennliniengeber (12b) enthält, der in Abhängigkeit von der Dieselmotordrehzahl ($n_D$) einen Leistungssollwert ($P_d^*$) bildet, der zur Steuerung der Wechselrichter-Regeleinrichtung (19) verwendet wird.

Fig. 1

Fig. 3

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | BROWN BOVERI MITTEILUNGEN, Band 12, Dezember 1977, Schweiz M. ROFFLER "Die Diesellokomotiven Serie Am 6/6 der Schweizerischen Bundesbahnen", Seiten 701-713 * Seiten 702, 703, 705; Figur 5 * | 1-3 | F 02 D 29/06 B 60 L 11/08 |
| | --- | | |
| P,A | ELEKTRISCHE BAHNEN, Band 80, Nr. 11, November 1982, München W. GÖS "Dieselelektrische Rangierlokomotive mit Drehstrom-Kraftübertragung nach dem Prinzip des Strom-Zwischenkreisumrichters", Seiten 322-327 * Absatz 3.1; Figuren 4, 5 * | 1-3 | |
| | --- | | |
| A | DE-C-1 241 190 (GEBR. SULZER AG) * Spalte 1, Zeile 1 - Spalte 2, Zeile 49; Figur 1 * | 1-3 | RECHERCHIERTE SACHGEBIETE (Int. Cl. ³) |
| | --- | | |
| D,A | IEEE TRANSACTIONS ON INDUSTRY APPLICATIONS, Band IA-9, Nr. 4, Juli/August 1973, New York J. BRENNEISEN et al. "A new converter drive system for a diesel electric locomotive with asynchronous traction motors"; Seiten 482-490 * Kapitel "Control system"; Figur 10 * | 1-3 | B 60 L 11/00 F 02 B 63/04 F 02 D 29/00 |
| | ----- | | |

Der vorliegende Recherchenbericht wurde für alle Patentansprüche erstellt.

| Recherchenort BERLIN | Abschlußdatum der Recherche 27-07-1983 | Prüfer FAORO G |
|---|---|---|